Europäisches Patentamt

European Patent Office

Office européen des brevets

(11) Publication number: **0 330 713**
**A1**

## (12) EUROPEAN PATENT APPLICATION

(21) Application number: 88103133.0

(51) Int. Cl.⁴: **G02C 5/22**

(22) Date of filing: 02.03.88

(43) Date of publication of application:
06.09.89 Bulletin 89/36

(84) Designated Contracting States:
AT BE CH DE ES FR GB GR IT LI LU NL SE

(71) Applicant: **NEW SUN OPTICAL ENTERPRISES
CO., LTD.**
**No. 622, Forng-Jea Road**
**Tainan(TW)**

(72) Inventor: **Ouen, Guo-Jen**
**No. 48, Alley 77, Lane 381 Chung-Cheng S.
Road**
**Yun-Kang Tainan Taiwan(TW)**

(74) Representative: **Perani, Aurelio et al**
**c/o JACOBACCI-CASETTA & PERANI 7, Via
Visconti di Modrone**
**I-20122 Milano(IT)**

(54) **Temple-to-frame connector.**

(57) This invention relates to a connector which is specially designed and provided for the frames of opticals, mainly comprising of two fixed frames which are separately formed by the direct punching of elastic steel, on the upper and the lower convex plates of which a middle hole is set, and on the interior wall of the upper and the lower wedge plates of the lateral fixed frame two convex particles are set. At the time of assembly, the convex plate of the front fixed frame is pushed into the space which lies between the two wedge plates on the front end of the lateral fixed plate, so that the two convex particles set on the interior wall of the upper and the lower wedges will be squeezed into the middle hole on the convex plate of the front fixed plate without dropping out this ensuring both easy assembly and convenient application.

FIG:1

The connector provided by this invention is specially designed and made for the frames of opticals, composed mainly of two fixed frames made of elastic steel plates which, by means of the inter-engagement of the protrusive particles on the wedge of the fixed frames and the middle hole of the convex plate, can be rotated at will, so as to facilitate the easier fabrication and assembly of opticals, without concern as to the loss of screws.

An optical is a product which is initially designed and made to provide assistance to persons who with impaired vision, and which will assists them in seeing objects more clearly. Opticals have been very popular since the introduction of the first sun-glasses. Some people even purchase several pairs of opticals to meet their various specific needs. In view of the rapid growth in demand for opticals, manufacturers are trying to expand their production capabilities as rapidly as possible to cope with market exigencies.

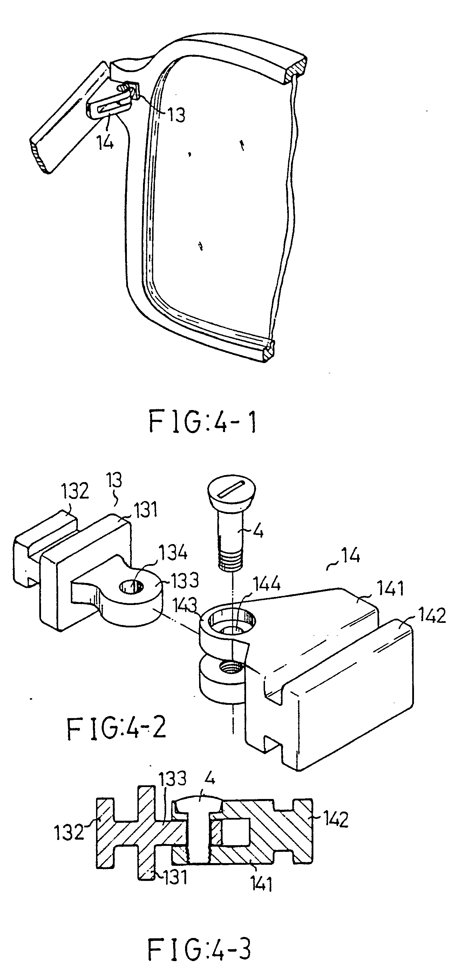

With the progress of modern technology, manufacturers have relied more increasingly on automatic machines for the manufacturing of most component parts and fittings of opticals, so as to lower production costs and upgrade production capabilities. However, basing on the practical experience in the manufacturing of opticals, it is found that the groove of the connector which is being used to connect the frame and the foot frame of opticals, as shown in Fig. 4, must be cut step by step by a tool, with holes to be punched and threads to be set in the interior of such holes, prior to screwing the screw into the interior of the hole of the connector. As shown in Fig. 4, the two fixed frames 13 14 of the connector are found to be very small in size. At the rear end of the base plates 131 141 of the two fixed frames 13 14, two protrusive inserting edges 132 142 are set and, at the time when the optical frame 2 and the foot frame 3, which are made of plastic, are fabricated through an injection molding process, the forementioned two injecting edges can be attached onto the optical frame and the foot frame for positioning. A convex plate 133 with holes is set at the middle of the front end face of the base plate 131 of the front fixed frame 13. In addition, a convex plate 143 is separately set on the upper and the lower front end faces of the lateral fixed frame 14 and a middle hole 144 is also separately set into the two forementioned convex plates 143. The gap which lies between the forementioned two convex plates 143 is large enough to accomodate the convex plates 133 of the front fixed frame 133. During assembly, the screw 4 which are to be used should be of a very small size in accordance with the two small holes 134 144 of the forementioned protrusive holes. Superb skill is needed for the insertion of the protrusive plate 133 into the space lying between the two convex plates 143, wherein the convex plate 133 should be in alignment with the middle holes prior to taking the screw and inserting them into the middle holes, so as to connect the optical frame and the foot frame, and thereby accomplish the assembly of the frame of the opticals. This has produced difficulties in the manufacturing processes of opticals, and has made the assembly process more time-consuming and increased production costs. Consequently, this has been an obstacle which has hindered the proper development of the manufacture of inexpensive optical products.

Typically, the greatest source of trouble to daily users of optical lies with the screws mentioned above, which, after a long period of usage, are likely to loosen and drop out, rarely to be found once fallen to the ground. The user is often inconvenienced by the need to have his opticals repaired by professionals.

In view of the defects found in the utilization of the forementioned connectors made for conventional opticals, the inventor, after years of research and testing, has developed this invention which is noteworthy for its simple and easy assembly, without the need to worry about the loss of screws, making the usage of opticals much less troublesome. Therefore, it is regarded as an invention of a very great practicality.

In order to provide a better understanding of the structure and functions of this invention, relevant drawings and illustrations are set out as follows:

(1) Reference to Drawings:

    Fig. 1 - solid plane view of this invention.
    Fig. 2 - illustration showing view of this invention after its assembly.
    Fig. 3 - illustration indicating the embodiment of this invention.
    Fig. 4 - structural drawing of conventional connectors.

(2) Reference to their serial numbers:

| connector | 1 1' | front fixed frame | 11 |
|---|---|---|---|
| base plate | 111 | inserting edge | 112 |
| convex plate | 113 113' | holes | 114 114' |
| gap | 115 | plate edge | 116 116' |
| concave groove | 117 | lateral fixed frame | 12 |
| base plate | 121 | inserting edge | 122 |
| wedge plate | 123 123' | protrusive impression | 124 126 |
| convex column | 125 125' | plate edge | 127 127' |
| front fixed plate | 13 | base plate | 131 |
| inserting edge | 132 | convex plate | 133 |
| middle hole | 134 | lateral fixed frame | 14 |
| base plate | 141 | inserting edge | 142 |
| convex plate | 143 | middle hole | 144 |
| optical frame | 2 | foot frame | 3 |
| screw | 4 | | |

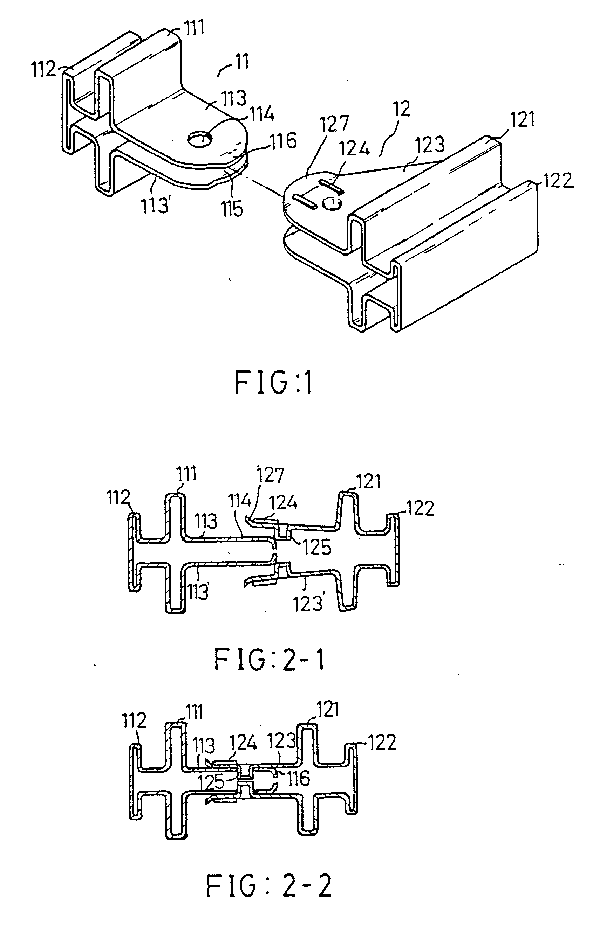

In order to facilitate description, the embodiment in Fig. 1 is provided herewith to cope with the structure and function of this invention. Other variation will be described at a later stage. As can be seen in Fig. 1, the front and the lateral fixed frames 11 12 of this invention·are separately made of elastic steel plates through punching, wherein the front fixed frame 11, to accomodate the bending which is caused by punching, will form a convex inserting edge 112 at the rear end face of the base plate 111, providing such functions as described above. An upper and a lower convex plate 113 113' with a small gap 115 are extended along its front end face. Its front end plate edges 116 116' are bent slightly inward to increase their strength, while at the forementioned convex plates 113 113', holes 114 114', which are pierced at the central point, are set; an inserting edge 122 must be set at the rear end face of the base plate 121 of its lateral fixed farme 12 to cope with the requirement. Two upper and lower wedge plates 123 123' are extended forward from the front end face of the base plate 12. The gap which lies in between the forementioned two wedges 123 123' accomodates the convex plate convex plate 113 113', which extend separately from the front fixed plate. A protrusive particle or column 125 is punched in the interior lateral face at the center of the upper and the lower wedge plates 123 123'. Again, one or more impressions are set by similar punching process at the front lateral side of the wedge plate 123, enabling the front end plate edge 127 of the wedge plate to be bend silghtly upward and outward.

According to this ingenious design, the front and the lateral fixed frame 11 12 of the connector of this invention, which are made of elastic steel, are formed by direct punching that makes the manufacturing process easier and more rapid. Moreover, owing to the fact that the steel plate used is of an elastic nature, during the assembly of the forementioned two fixed frames 11 12 as shown by Fig. 2, the convex plates 113 113' of the front fixed plate 11 must be pushed into the space between the two wedge plates 123 123' of the lateral fixed frame 12. When the protrusive particles or column 125 125' on the upper and the lower wedge plates 123 123' are in alignment with the holes 114 114' which are located at the center of the convex plate 113 113', the forementioned convex particles or convex columns 125 125' will be squeezed into the holes 114 114' of the convex plates 113 113', and thus fully positioned. At the same time, the forementioned convex particles or convex columns 125 125' will also serve as a fulcrum for rotation. As no special skill is involved in this operation, it is highly practical.

Moreover, because plate edges 127 127' are bent slightly outward at the front extreme end of the two wedge plates 123 123', which are set at the front end face of the lateral fixed frame, the insertion of the convex plate proceeds smoothly and without hindrance. At the same time, one or more protrusive impressions 124 are set on the front end of the upper and the lower wedge plates 123 to increase the strength of the wedge plate 123. When the protrusive particles or columns 125 125' are squeezed into the holes 114 114' of the convex plate, the forementioned two parts can be firmly joined together due to the elasticity of the wedge plates 123 123', preventing their collapsing. In addition, when disassembling, the user need only slightly prop open the upper and the lower wedge plates 123 123' of the lateral fixed frame in an outward direction, or press onto the upper and the lower convex plates 113 113' to separate the front and the lateral fixed frames from one another in removing the optical frame and the foot frame.

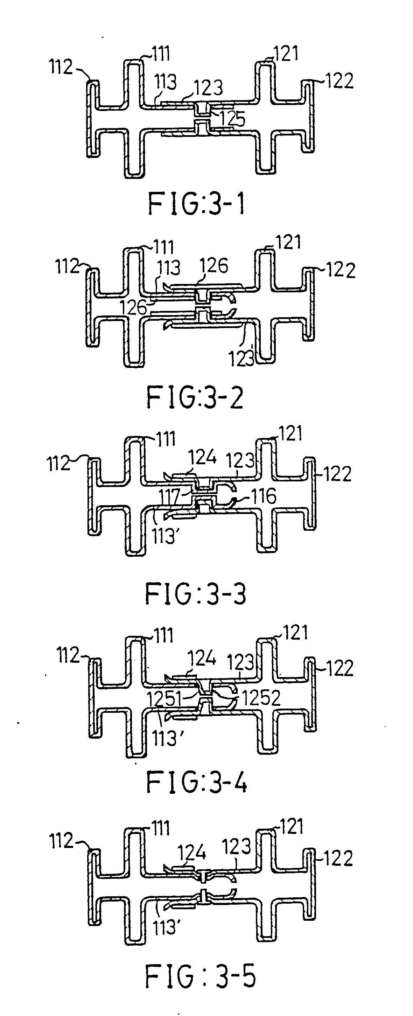

As shown in Fig. 3, the shape and the structure of the fixed frames of this invention may be changed, so that the convex plate 113 113' and the wedge plates 123 123' may also be designed into a plain straight shape as shown in Fig. 3-1; or long strips of protrusive impressions 126 can be set into the exterior lateral face of the convex plates 113 113' and on the exterior lateral plate face of wedge plates 123 123' as shown in Fig. 3-2; or the holes 114 114' may designed in such a way that they can be directly punched on the plates into inverted groove 117 117' as shown in Fig. 3-3, of which the setting of the protrusive particles or columns 125 125', can, of course, be arranged as indicated in Fig. 3-4, so as to enable the front lateral face 1251 of the convex column to present a slightly-slanting face and the rear lateral face 1252 to present a vertical face. In addition, the forementioned protrusive columns 125 125' can also be riveted in the form of a column body consisting of a comparatively large-sized cap head on wedge plate 123 123' as indicated in Fig. 3-5, so as to form a protrusive columns 125 125' on the interior lateral face of the wedge plate to achieve the same object.

Summarizing the above description, this invention provides a fixed elastic frame structure forming convex plates and wedge plates by means of punching and, by means of the holes and the convex columns set on the plate face, to allow the inter-engagement of the forementioned fittings and, due to the elasticity of the steel plate itself, to make the engagement of the wedge plate and the convex plate more secure. In this way, no screw are required in the assembly of the structure of the optical connector provided by this invention. In addition, the entirely new design of its structure and its easy assembly and disassembly also enhance the practicality of this invention.

## Claims

1. A new connector structure which is specially designed and made for opticals, comprising a front fixed frame and a lateral fixed frame made of elastic steel by punching, wherein its main features lie in its front fixed frame, from which two parallel convex plates extend forward, with two holes set in the center of the forementioned two convex plates which are opposit one another at their upper and lower points; moreover, owing to the fact that, on the lateral fixed frame, parallel wedge plates are also extended forward from their base plate, the gap between the forementioned upper and the lower wedge plates allows the insertion of the two convex plates of the front fixed frame and protrusive particles or columns which are opposit the holes set in the two convex plates, set into the interior wall face of the upper and the lower wedge plates, so as to enable the inter-engagement of the forementioned two parts into position.

2. The connector as described under Claim 1, wherein two parallel wedge plates are extended forward from the front end of the lateral fixed frame and the front end of its plate edge can also be bent inward, so as to increase the strength of the convex plate and to facilitate the function of the forementioned two parts which have been inserted in between the two wedge plates of the lateral fixed frame.

3. The connector described under Claim 1, wherein two parallel wedge plates are extended from the front end of the lateral fixed frame and the front end of its plate edge, can be formed into an opening which is slightly bent toward the exterior lateral face, so as to facilitate the insertion of the convex plate of the front fixed frame.

4. The connector described under Claim 1, wherein on the plate face of the convex plate and the wedge plate which are extended respectively from the front end face of the front fixed frame and the lateral fixed frame convex impression which are slightly protrusive can also be designed, so as to increase its strength and adhesivity after insertion.

5. The connector described under Claim 1, wherein the holes which are set on the convex plate face of the front fixed frame can also be changed into an inverted groove by direct punching.

6. The connector described under Claim 1, wherein on the interior wall face of the two wedge plates of the lateral fixed frame the convex columns are set, of which the front lateral face may also be arranged to present a slightly slanting shape and its rear may be arranged to present a vertical shape, so as to facilitate their squeezing into the holes which are set into the convex plates of the front fixed frame.

7. The connector described under Claim 1, wherein protrusive columns are set on the interior wall of the two wedge plates of the lateral fixed frame, which can also be arranged into a column body consisting of a larger-sized cap head which may be riveted on the wedge plate.

8. The connector described under Claim 1, wherein its lateral fixed frame and its front fixed frame can also be made of metal or non-metal substances with comparatively greater elasticity.

FIG:1

FIG:2-1

FIG:2-2

FIG:3-1

FIG:3-2

FIG:3-3

FIG:3-4

FIG:3-5

FIG:4-1

FIG:4-2

FIG:4-3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 123 987 (R. PETER)<br>* Abstract *<br>--- | 1 | G 02 C 5/22 |
| A | GB-A-2 034 072 (LES MUST DE CARTIER)<br>* Page 1, lines 44-129; page 2, line 1 *<br>--- | 1 | |
| A | US-A-4 699 479 (R.T. METCALFE)<br>--- | | |
| A | US-A-4 488 792 (O.W. WAGNER)<br>--- | | |
| A | DE-U-8 711 337 (SIMRO AG)<br>----- | | |

TECHNICAL FIELDS
SEARCHED (Int. Cl.4)

G 02 C 5/22
G 02 C 5/14

The present search report has been drawn up for all claims

| Place of search | Date of completion of the search | Examiner |
|---|---|---|
| THE HAGUE | 09-11-1988 | CALLEWAERT-HAEZEBROUCK H |